# EUROPEAN PATENT APPLICATION

(11) **EP 3 246 830 A1**
(43) Date of publication of application: **22.11.2017**
(21) Application number: 16170607.2
(22) Date of filing: 20.05.2016
(51) Int. Cl.: G06F 17/50

(54) **AIR HANDLING CONFIGURATOR ENVIRONMENT**

(71) Applicant: Systemair A/S, 8361 Hasselager (DK)
(72) Inventor: BANG, Ulf, 8700 Horsens (DK); SVENDSEN, Henning, 8751 Gedved (DK); NIELSEN, Leif Kjær, 8600 Silkeborg (DK); MAAGAARD, Steffen Enersen, 8000 Aarhus C (DK); KIM, Maxim, 27340 Reila (FI); YLLIKÄINEN, Teemu, 21350 Ilmarinen (FI)
(74) Representative: Nielsen, Leif

(57) **Abstract**

Disclosed is a computer-implemented method of configuring an air handling (AH) unit (AHU) for providing airflow between an external side and an internal side. There is an act of providing a computer-aided design (CAD) environment with access to a library of objects of AHU components. The CAD environment may be configured for a user input for selecting and or changing objects of AHU components. There may be an act of providing an operational environment configured to store time series of seasonal data of external conditions. There may be time series of internal conditions that may include inlet and/or operational conditions. There may be an act of linking the CAD environment with the operational environment for exchange of data and instructions. There may be an act of configuring in the CAD environment objects of an AHU with at least one external input and at least one internal output. This act may be by selecting, linking and/or changing objects of AHU components in the CAD environment. There may be an act of generating a computable model of the AHU in the CAD environment. The computable model is configured to simulate operation as a function of at least one external input and to return at least one internal output. There may be acts of repeatedly performing one or more acts of the following acts: There may be an act of retrieving at least one record of seasonal data from the operational environment. There may be an act of simulating operation of the AHU in the CAD environment using the computable model. There may be an act of returning to the operational environment the result of simulating. There is an act of estimating aggregated operation of the AHU in the operational environment based on the stored simulation results of operation of the AHU. Disclosed is also a configurator arranged to perform one or more of the disclosed acts.

## Description

### Field of invention

This invention relates to a computer-implemented method of and a configurator for configuring an air handling (AH) unit (AHU) for providing airflow between an external side and an internal side.

### Background of the invention

Computed aided design (CAD) programs are generally available for design, arrangement, and configuration of systems including air handling (AH) systems that include heating ventilation and air conditioning (HVAC or VAC) units.

Such AH CAD systems are capable of configuring a complete system, unit or aggregate of interconnected components such as fans, heat exchangers, conduits, power supplies etc.

Each component may have a specific characteristic or functional description that can be modelled or simulated. Likewise a configured complete system or unit may to some extend be modelled or simulated for a particular range of conditions.

It is an objective of the present invention to overcome shortcomings of here-to known configurators and methods of configuring air handling systems.

It is an objective of the present invention to provide a workable implementation of configurators and acts of configuring that can devise an overall better than here-to air handling systems or aggregates.

It is an objective of the present invention to provide a workable configurator and acts of configuring that can take extreme events or conditions into account.

It is an objective of the present invention to provide multiple suggestions to be presented for final configuration of a system or aggregate.

It is an objective of the present invention to provide engineering insight and information about components that are critical under certain conditions.

Here-to configurators and the vast and increasing number of possible components have faced practical limitations due to the practically indefinite number of possible combinations (in the order of several hundred million - and increasing).

It is an objective of the present invention to provide a configurator and acts of configuring that enable reduction of such large number of combinations to a limited number and practically working system solutions of configured systems and aggregates.

In particular working approximations that overcome the incalculable nature of the art of designing has been a long-felt need to the person skilled in the art.

Overall a further objective is to enable configuration and acts of configuring that will result in overall cost and energy-saving air handling systems.

A further objective is to enable configuration and acts of configuring that enable interaction with a skilled person in the art of configuring and to allow for human selection of systems and/or components. A further objective is to provide for inclusion of human experience or empiricism in the act of configuration.

It is an objective of the present invention to provide a simulation of the yearly energy consumption of the AHU. This may include electrical consumption of the fans, heating demand and cooling demand.

It is an objective of the present invention to provide a simulation of several AHU configurations, running the same operation scenario, to optimize the energy consumption of a building installation.

### Description

An object is achieved by a computer-implemented method of configuring an air handling (AH) unit (AHU) for providing airflow between an external side and an internal side. The method may comprise one or more of the following acts:
There may be an act of providing a computer-aided design (CAD) environment with access to a library of objects of AHU components. The CAD environment may be configured for a user input for selecting and or changing objects of AHU components.

There may be an act of providing an operational environment configured to store time series of seasonal data of external conditions. There may be time series of internal conditions that may include inlet and/or operational conditions.

There may be an act of linking the CAD environment with the operational environment for exchange of data and instructions.

There may be an act of configuring in the CAD environment objects of an AHU with at least one input and at least one output. This act may be by selecting, linking and/or changing objects of AHU components in the CAD environment.

There may be an act of generating a computable model of the AHU in the CAD environment. The computable model is configured to simulate operation as a function of at least one external input and to return at least one internal output.

There may be acts of repeatedly performing one or more acts of the following acts:
There may be an act of retrieving at least one record of seasonal data from the operational environment.

There may be an act of simulating operation of the AHU in the CAD environment using the computable model.

There may be an act of returning to the operational environment the result of simulating.

Finally, there is an act of estimating aggregated operation of the AHU in the operational environment based on the stored simulation results of operation of the AHU.

Thereby is achieved a workable implementation of actions of configuring an AHU that overall is better than here-to air handling system or aggregate. The actions allow for better than here-to selection or use of components that over time or over different operating conditions result in lower overall usage of resources such as energy or maintenance.

A person skilled in the art will appreciate that an air handling (AH) unit may be ventilation or air conditioning (HVAC) or a ventilation air conditioner (VAC). The unit or AHU is to operate between an external side with external conditions such as temperature, humidity etc. and an internal side with internal conditions such as temperature, humidity etc. There may be inlet conditions on the internal side and there may be operational conditions.

A person skilled in the art will be able to choose one of several available CAD environments or programmes and reconfigure or modify the CAD environment to achieve the following:
The CAD environment may include or link to a library of AHU components including fans, heat exchangers, ducts or air communicators or conductors. There may be a library of cabinets for inserting components. Components may be linkages or there may be a separate library of linkages for interconnecting active components. The library of components may include models, computer codes, tabulated or otherwise calculable descriptions that allow for computing an output as a function as an input.

The CAD environment may include the functionality that a user via a user interface can select components and arrange components to configure the AHU or aggregate.

The operational environment may be separate from the CAD environment. In an embodiment the operational environment may be a spreadsheet type of computer-implemented program choosable from a variety of possible implementations such as Microsoft's Excel, Open Office's Calc, Corel's Quattro Pro, just to mention a few. The person skilled in the art will appreciate that the selection of a suitable spreadsheet may require few considerations regarding modification of programing language.

The operational environment may be implemented in its own programming language of any level. The operational environment may be implemented as an add-on or plug-in to the CAD environment provided. In one embodiment the operational environment may be embedded in the CAD environment.

The linking of the CAD environment and the operational environment may be configured so that the two environments can exchange data and/or instructions. The linking may be understood as interfacing the two environments.

The CAD environment may generate a computable model of the configured AHU. The computable model may be understood broadly as a model capable of generating an output based on an input. The input may be conditions on the external side and conditions on the internal side. The input may include internal side inlet and/or operational conditions. The computable model may be constructed as a series of models or simulations of individual AHU components including models of links between components. A model for a component may be a general physical model such as a pressure drop relation. A model may be a look-up in a table of measures or empirical data. A model may be a simulation code available, either openly available or supplied with the object of the AHU component. In cases the simulation code may be a black box, such as a DLL supplied by the supplier of the component, albeit still enabling the CAD environment to generate a computable model.

The repeated performed acts of passing, simulating and storing data may be on a single record at a given time, a subset of the time series or the complete time series.

A time series may be hourly sampled or collected data covering a year. Such a time series has about 8760 records. Time series may comprise more frequent data and thus be longer.

In this embodiment, passing of at least one record is understood to be from the operational environment to the CAD environment. However data may come from an external storage or elsewhere. In an embodiment, the operational environment may source the data from a server or collect and compile data from different sources.

The simulation of the operation of the AHU may be performed in the CAD environment. Alternatively the simulation may be performed in a plug-in or environment separate from the CAD environment.

The result of the simulation may be stored in the operational environment or in a separate storage with access or control from the operational environment.

Aggregated operation may be understood as the overall operation for at least one record of the time series, of multiple records of time series or the whole time series. The aggregated operation of a single record may be from a special single record chosen, selected or computed in or via the operational environment.

Estimated aggregated operation may be a Life Cycle Cost (LCC) type of analysis. However the person skilled in the art may appreciate variations in LCC measures or establish other measures to assess the aggregated operation for long series of data.

It is understood that it is within such environments that acts may be performed to achieve the objects. It is also understood that the person skilled in the art will have to asses or perform slight modification to off-the-shelf environments.

In an aspect, the computer-implemented method may comprise the following acts:
There may be an act of specifying a reduced set of working points. There may be an act in the CAD environment of simulating specific fan power (SFP) values using only the reduced set of working points. There may an act in the operational environment of estimating aggregated electrical use of the AHU by interpolating between the SFP values, thereby significantly reducing the computational time of estimating aggregated operation of the configured AHU allowing for user interactive configuration and exploration of suggested configuration.

The approximation has shown to result in sufficiently accurate estimates.

The reduced set may be generated by normalising working points and bin the range into a reasonably low number of intervals. One working reduction may be reducing the continuum of working points to eight working points e.g. 100, 90, 80, 70, 60, 50, 40, and 30 per cent.

Rather than passing a long set, e.g. annual hourly set of time series, passing only the reduced set, such as eight working points, for simulation of operation in the CAD environment enables for a fast and working approximation. Storing the result in the operational environment allows for subsequent estimating the aggregated operation of the AHU by interpolating between the stored results. Interpolation may be a simple linear interpolation. Interpolation may be by other means or functions of interpolating.

In particular, simulating the specific fan power (SFP) values using only the working points and subsequently estimating the aggregated electrical use of the AHU by interpolating between the SFP values has shown to be effective and advantageous.

In an aspect, the computer-implemented method may comprise acts of estimating multiple aggregated operations of multiple configured AHUs and presenting the aggregated operation of multiple AHUs for a user selection to be returned to the CAD environment for further manual configuring.

The act of estimating multiple aggregated operation scenarios of different possible AHUs for a particular requirement has proven effective since the enablement allows the user or designer to explore different options in the same integrated environment. It also enables the user or designer to explore multiple designs within a reasonable design time.

Different configurations of AHUs, and here importantly, even changes of a single or a few components from one class to another class, e.g. from one size to another size, may on face value, without estimating the aggregated estimate, appear cost- or energy-effective, but the aggregate estimation of cost- or energy-efficiency may show otherwise. Likewise choosing a configuration with a less cost or energy effective component, may appear cost or energy effective when taking the aggregated estimate into account. At least the acts of configuring may disclose non-obvious configurations that are here-to unknown or non-trivial to the user or designer. Moreover the acts of configuring enables the user to present and explore different configurations and to select an overall more effective configuration taking specific conditions into account over time.

A further effect of displaying multiple configurations is that a skilled person may be challenged to investigate or further refine a particular configuration, which configuration might be beyond common thinking or practice in the field of configuring.

A further effect of displaying multiple configurations it that, although the CAD environment and the components in principle provide a computable model, then an experienced user or designer may be presented with very similar solutions, e.g. also in the aggregated estimate of operation, but may disregard or prefer one or more configurations based on experience that not computable.

In an aspect, the computer-implemented method may comprise an act of sorting the seasonal data according to conditions data prior to repeatedly simulating operation of the AHU and prioritising repeatedly simulating operation of the AHU according to the sorted seasonal data.

The act of sorting and prioritising enables further reduction in complexity or time required before a working aggregated estimate is achieved. The sorting may be different to time-ordered, e.g. by time stamps. The sorting may be according to external conditions and/or internal conditions.

In an aspect, the computer-implemented method may comprise an act of identifying boundaries of the seasonal data and prioritising the act simulating operation of the AHU of the identified boundaries, thus enabling assessment of operation in "extreme" situations or conditions. Such assessment may provide a first and thus fast assessment of durability and provide information of the configuration that is likely to be durable, or if the configuration is out of bounds for one or more extreme conditions or events.

In an aspect, the computer-implemented method may comprise an act in the operational environment of assessing if a record of seasonal data has previously been simulated - and if so reusing the previous result of simulating without simulation in the CAD environment, thereby enabling efficient use of the computational resources and reducing or eliminating the need for heavy simulations in the CAD environment.

In an aspect, the computer-implemented method may comprise an act of providing multiple zones of one or more internal, inlet and/or operational conditions and performing an act of averaging the respective conditions prior to performing repeatedly simulating operation of the AHU.

In an aspect, the computer-implemented method may comprise the act simulating operation of the AHU in the CAD environment and involve simulating at least one or more of:
∘ Heat recovery [%]
∘ Cooling coil capacity [kW]
∘ Heating coil capacity [kW]
∘ Heating coil capacity - Electricity [kW]
∘ Heat pump [kW]
∘ Control system, related to damend controlled ventilation [kW]
∘ Humidifier, as adiabatic cooling [kW]

Simulation of water consumption may also be included.

In an aspect, the computer-implemented method may comprise that the act of estimating aggregated operation and involves estimating at least one or more Life Cycle Costs (LCCs) of:
∘ Purchase cost;
∘ Operation costs; or
∘ Maintenance cost.

There may optionally be acts of estimating annual cost of operation of
∘ Fan power;
∘ Cooling coil;
∘ Heating coil (district heating);
∘ Heating coil (electrical);
∘ Integrated cooling;
∘ Heat pump; or
∘ Humidifier.

There may optionally be acts of estimating life expectancy [Average] of annual operation [Hours].

An object of the invention may be achieved by a configurator for configuring an air handling unit (AHU) for providing airflow between an external side and an internal side.

The configurator may comprise a computational unit comprising at least one processor and at least one storage. The configurator may further comprise a computer-aided design (CAD) environment with access to a library of objects of AHU components and an operational environment configured to store time series of seasonal data of external and internal data. The internal data may include inlet and/or operational conditions.

The configurator may include a user interface for a user to interact with the CAD environment and/or the external operational environment.

The CAD environment may be configured to generate a computable model of the AHU for simulating operation as a function of at least one external input and to return at least one internal output.

The operational environment in the configurator may be configured to store time series of seasonal data of external and internal records. These may include inlet and/or operational conditions.

The configurator is configured to repeatedly passing at least one record of seasonal data from the operational environment to the CAD environment, simulating operation of the AHU in the CAD environment using the computable model; and storing in the operational environment the result of simulating.

Furthermore the configurator is configured to estimating aggregated operation of the AHU in the operational environment based on the stored simulation results of operation of the AHU.

In an aspect, the configurator is arranged and configured to performing one or more of the described acts.

### Brief Description of Drawings

Embodiments of the invention will be described in the figures, whereon:
Fig. 1 illustrates computer-aided design (CAD) environment for configuring an air handling unit (AHU);
Fig. 2 illustrates a computer-implemented method 100 of configuring an air handling unit (AHU);
Fig. 3 illustrates an embodiment of a computer-implemented method 100 with pre-processing data;
Fig. 4 illustrates a configurator for configuring an air handling unit (AHU) for providing airflow between an external side and an internal side;
Fig. 5 illustrates parts of an operational environment;
Fig. 6 illustrates parts of export data stored in the operational environment;
Fig. 7 illustrates a result of estimating aggregated operation of a configured AHU;
Fig. 8 illustrates an example of specifying a reduced set of working points;
Fig. 9 illustrates a table in the operational environment exemplified by the MS XL-spreadsheet of a reduced set of working points;
Fig. 10 illustrates alternative averaged and periodised operational conditions data;
Fig. 11 illustrates an example of a result of an implementation of a BPS based on a set of working points; and
Fig.12-13 illustrate collectively aspects of an implementation where the CAD environment is the Systemair CAD, and the operational environment is implemented in a Microsoft XL-spreadsheet and named Systemair LCC calculation spreadsheet.

### Detailed Description of Drawings

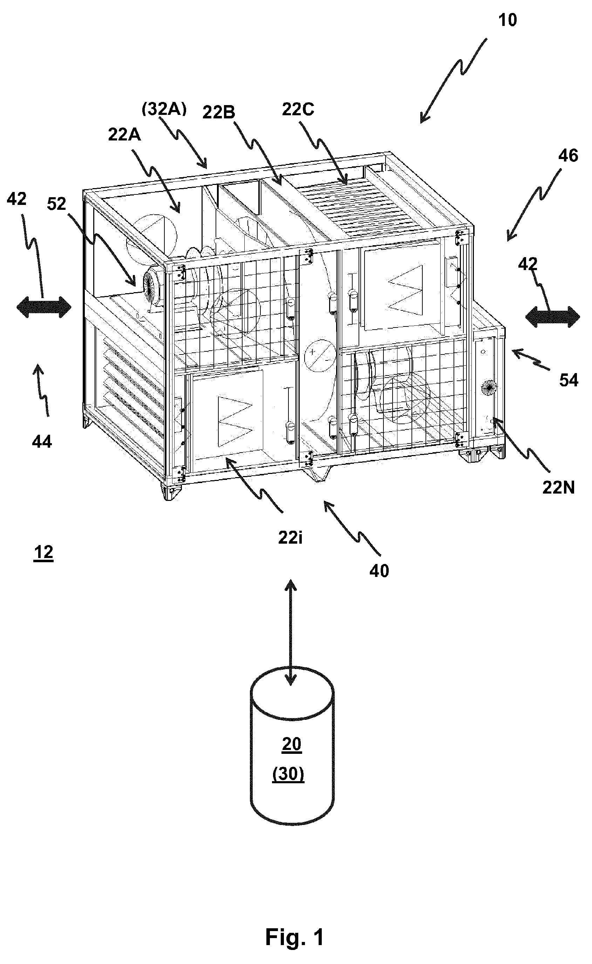

Figure 1 illustrates a computer-aided design (CAD) environment 10 with access to a library of objects of AHU components 20 and configured for a user input 12 for selecting and changing objects of AHU components 22 where an AHU component 22 may be of different types of functionality and for illustrative purpose referred to as 22A,22B, ... 22X. There may be N-components that may be referred to as 22A, ...22i,...22N.

There may be a separate library of objects of linkages 30 that are interconnections or links 32 between AHU components 20. Likewise a link 32 may be referred to as 32A... A link 32 may be considered as an AHU component 22.

The CAD environment 10 is configured so that objects of an AHU 22 can be arranged to form an air handing unit (AHU) 40.

The AHU 40 is for providing airflow 42 between an external side 44 with an internal side 46 of the AHU 40. The external side is typically the outside of a building and the internal side is typically the inside of a building.

The AHU 40 has at least one external input 52. The AHU 40 has at least one internal output 54. The input 52 and the output 54 are illustrative. Depending on the particular configuration of the AHU, the input 52 might be external or internal, and the output 54 might be internal or external.

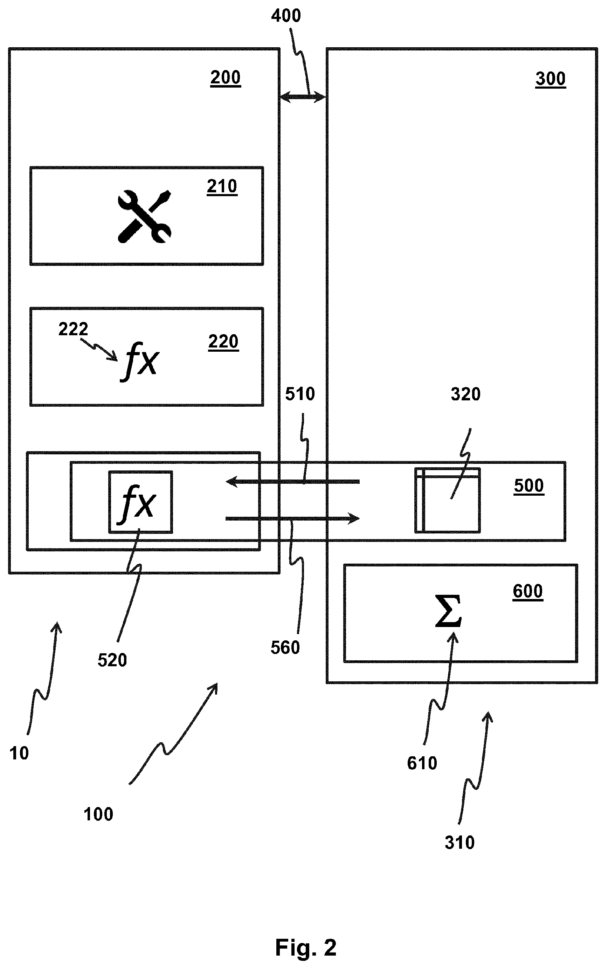

Figure 2 illustrates a computer-implemented method 100 of configuring an air handling unit (AHU) as illustrated in figure 1 by means of a CAD environment 10. The method 100 is for providing airflow 42 between an external side 44 and an internal side 42.

The illustrated computer-implemented method 100 may comprise the following acts:
There may be an act of providing 200 a computer-aided design CAD environment 10. The CAD environment may be similar to the CAD environment illustrated in figure 1 where the CAD environment may be with access to a library of objects of AHU components 20 and configured for a user input 12 for selecting and changing objects of AHU components 22.

There may be an act of providing 300 an operational environment 310 configured to store time series 320. The time series 320 may be of seasonal data 322 of external 332 and internal 334 data. The time series 320 may include inlet 336 and/or operational 338 conditions 330.

There may be an act of linking 400 the provided CAD environment 10 with the operational environment 310 for exchange of data and instructions.

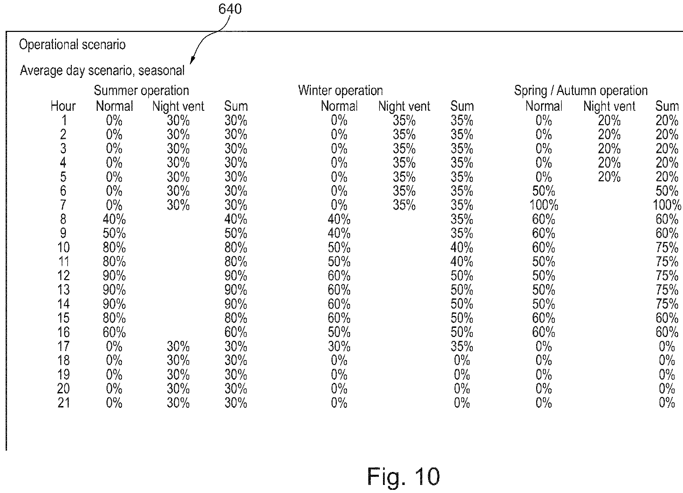

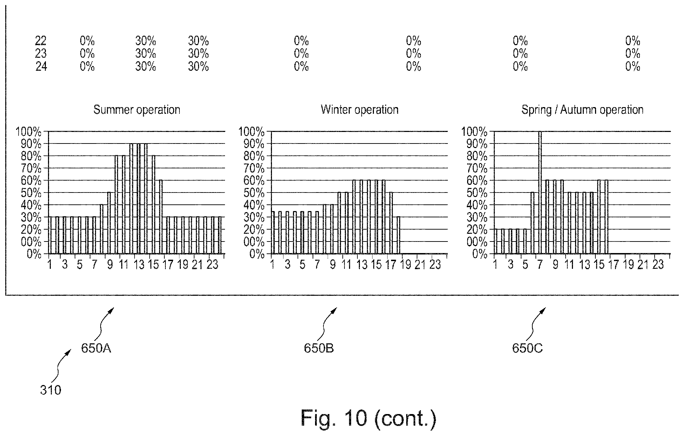

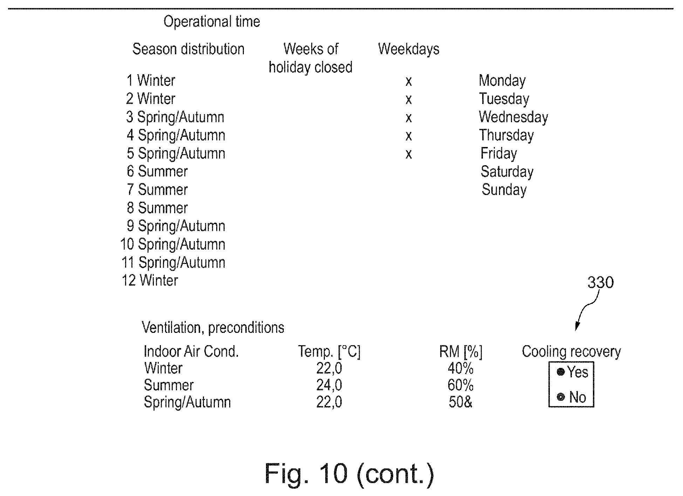

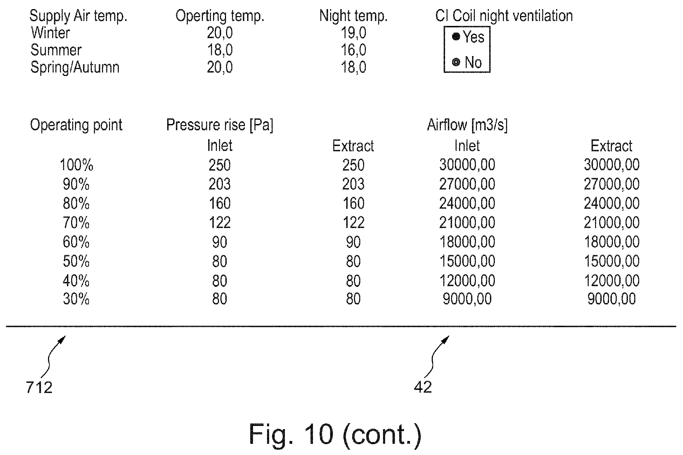

There may be an act of configuring 210 in the CAD environment 10 an AHU 40. The AHU 40 may be configured with reference to figure 10 for illustrative purposes with at least one external input 52 and at least one internal output 54. The configuration or design may be by selecting, linking and/or changing objects of AHU components 22 in the CAD environment 10.

There may be an act of generating 220 a computable model 222 of the AHU 40 in the CAD environment 10. The computable model 222 is configured to simulate operation 520 as a function of at least one input 52 and to return at least one output 54 of the AHU 40.

Generically, there may be a first act of generating 220A a first AHU 40A, a second act of generating 220B a second AHU 40B and so forth.

There may be one or more acts of repeatedly 500 performing one or more acts of exchanges or interactions between the CAD environment 10 and the operational environment 310.

There may be an act of passing 510 at least one record of the time series 320 such as a record of seasonal data 322 from the operational environment 310 to the CAD environment 10.

The act of passing 510 may be of the whole or a complete time series 320.

There may be an act of simulating 520 operation of the AHU 40 in the CAD environment 10 using the computable model 222.

There may be an act of storing 560 in the operational environment 310 the result of simulating 520.

Finally there is an act of estimating 600 aggregated operation 610 of the AHU 40 in the operational environment 310 based on the stored simulation results of operation of the AHU 40.

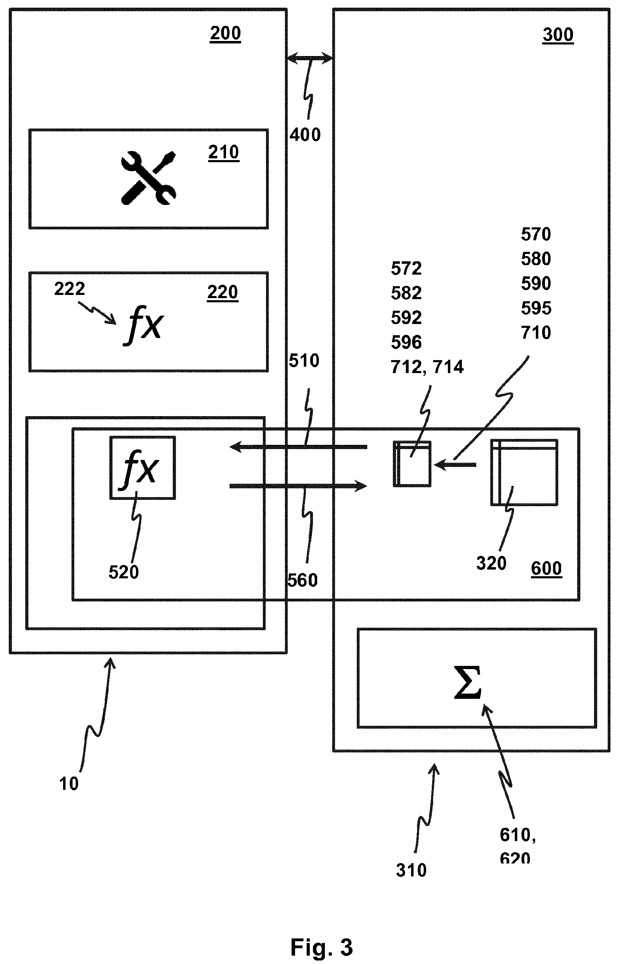

Figure 3 illustrates an embodiment of a computer-implemented method 100 in continuation of figure 2. The method 100 further involves one or more predetermined acts of pre-processing data in the operational environment 310. The act of pre-processing data may include one or more acts of reducing data or select data from the time series 320. The time series 320 may be seasonal data 322 as outlined.

There may be an act of sorting 570 time series 320 to generate a list of sorted data 572 to be transferred to the CAD environment 10.

There may be an act of reducing 580, such as selecting, time series 320 to generate a list of reduced data 582 to be transferred to the CAD environment 10.

There may be an act of identifying boundaries 590, such as minima or maxima, of time series 320 to generate a list of boundary data 592.

There may be an act of assessing 595, such as previously processed or simulated data, to filter out previously processed or simulated data, and thus enable reusing 596 previously simulated 520 results.

There may be one or more combined acts of sorting 570, reducing 580, identifying boundaries 590 or assessing 595 time series 320.

Such reduction will greatly reduce processing power required in the CAD environment 10.

As an example there may be a computer-implemented method 100 comprising an act of specifying a reduced set of working points 712 in the operational environment 310. The act may be followed by an act in the CAD environment 10 of simulating 520 specific fan power (SFP) 714 values using the only the working points 710. The acts may be followed by an act in the operational environment 310 of estimating 600 aggregated electrical uses of the AHU by interpolating 620 between the SFP 714 values.

The act of specifying a reduced set of working points is illustrated as being performed in the operational environment 310. The act of specifying may optionally be performed in the CAD environment 10.

As an example there may be a computer-implemented method 100 comprising an act of sorting 570 the seasonal data 322 according to conditions data 330 prior to repeatedly 500 simulating 520 operation of the AHU 40 and prioritising repeatedly 500 simulating 510 operation of the AHU 40 according to the sorted seasonal data 572.

As an example there may be a computer-implemented method 100 comprising an act of identifying boundaries 590 of the seasonal data 322 and prioritising the act of simulating 520 operation of the AHU 40 of the identified boundaries 592.

As an example there may be a computer-implemented method 100 comprising an act in the operational environment 310 of assessing 595 if a record of seasonal data has previously been simulated 590, and if so reusing 596 the previously obtained result of simulating 590 without simulation 590 in the CAD environment 10.

Such actions will significantly result in reduced processing time and allow for fast configuration of an AHU 40 taking overall performance under a variety of conditions according to the nature of the time series 320.

Specifics of the time series 320 and aggregated estimation 610 may be implemented by a person skilled in the art. Examples will be illustrated in subsequent figures or examples.

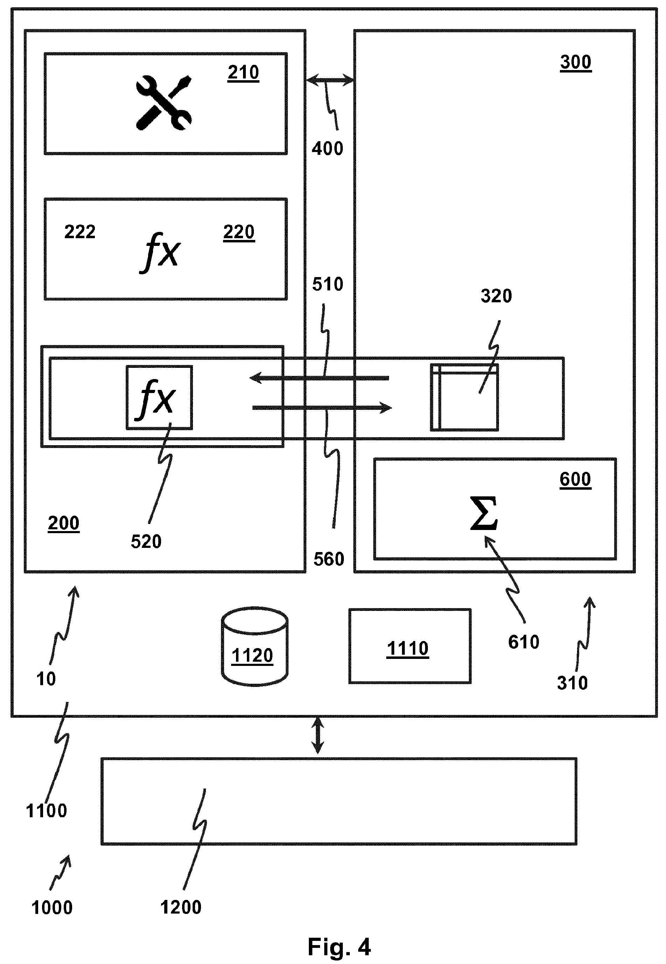

Figure 4 illustrates a configurator 1000 for configuring an air handling unit (AHU) 40 for providing airflow 42 between an external side 44 and an internal side 46 as outlined in figure 1.

The configurator 1000 may comprise a computational unit 1100 comprising at least one processor 1110 and at least one storage 1120 for computing the CAD environment 10 and the operational environment 310. The processor 1110 and the storage 1120 are configured to store the programmes and the time series 320 etc.

The configurator 1000 may include computer-aided design (CAD) environment 10 with access to a library of objects of AHU components 20 and the operational environment 310 configured to store time series of seasonal data 320 of external 332 and internal 334 data. This may include inlet 336 and/or operational 338 conditions 330. The operational data may include air flow, the external data may include climate data, and the internal data may include return air.

The configurator 1000 may include a user interface 1200 for a user or operator to interact with the CAD environment 10 and/or the external operational environment 310. The user interface 1200 may include a screen and a device such as a keyboard, mouse or other means for interacting with the computer environment.

The CAD environment 10 may be configured to generate a computable model 222 of the AHU 40 for simulating operation 520 as a function of at least one external input 52 and to return at least one internal output 54.

The operational environment 310 is configured to store time series 320 of seasonal data 322 of external 332 and internal 334 data. This may include inlet 336 and/or operational 338 conditions 330.

The configurator 1000 is configured to repeatedly 500 perform actions of passing 510 at least one record of seasonal data 322 from the operational environment 310 to the CAD environment 10, of simulating 520 operation of the AHU 40 in the CAD environment 10 using the computable model 222, and of storing 560 in the operational environment 310 the result of simulating 520.

The configurator 1000 is configured to estimating 600 aggregated operation of the AHU 40 in the operational environment 310 based on the stored simulation results of operation of the AHU 40.

The configurator 1000 can be assembled and prepared to execute actions as disclosed herein.

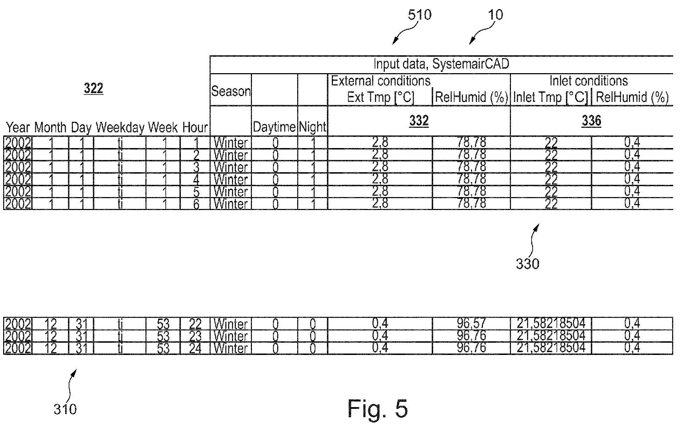

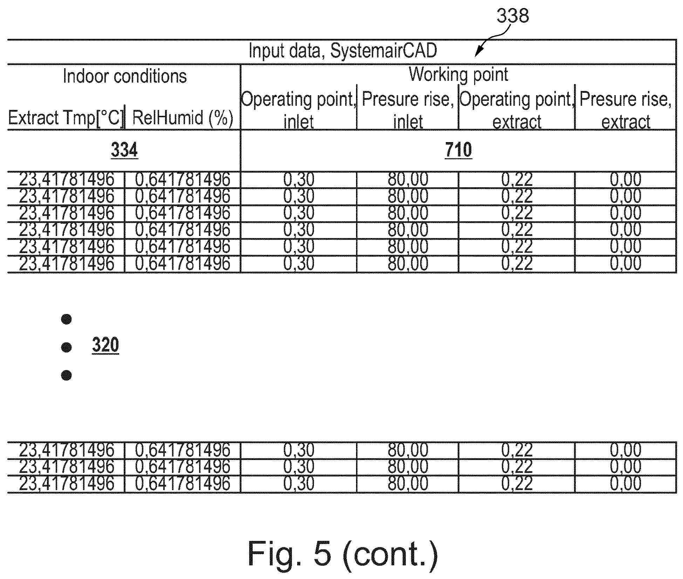

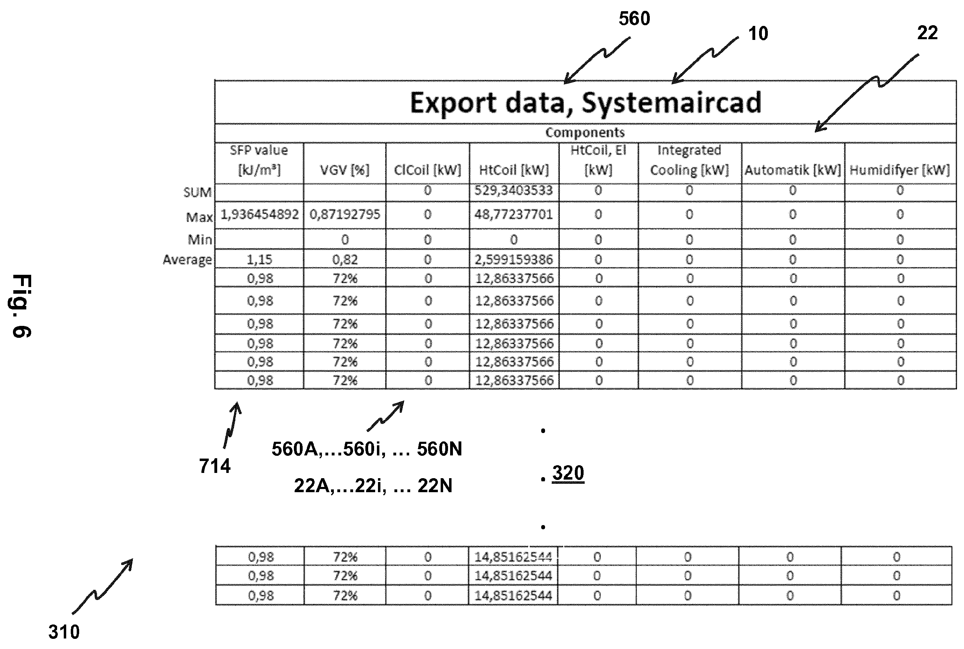

Figure 5 illustrates parts of an operational environment 310 that may be implemented in a spreadsheet as exemplified by extracts from an MS XL-spreadsheet. Figure 5 may be understood in connection with figure 6.

Specifically figure 5 shows an example of a time series 320 with seasonal data 322. The time series 320 comprises hourly data of a year and thus has 8760 records of data. The time series 320 comprises external conditions 332, inlet conditions 336, internal or indoor conditions 334, and operational conditions 338.

The table indicates the chosen or relevant conditions such as external temperature, external relative humidity 332, inlet temperature, inlet relative humidity 336, and internal temperature, internal relative humidity 334. Furthermore the table indicates the chosen or relevant operation or working point 710 conditions such as operating point at the inlet, pressure rise at the inlet, operating point at the internal output, and pressure rise that the internal output 338 .

The table or time series 320 holds some 8760 records of those data. The time series 320 may be the result of a standard average year and compiled by design or be the result of a building simulation.

The time series 320 is arranged and prepared for interaction with a CAD environment 10 linked 400 to the operational environment 310. In this embodiment the operational environment 310 is a Microsoft XL spreadsheet 310 linked 400 with a Systemair CAD environment 10 and the time series 320 is prepared for passing 510 at least one record of the time series 320 or the whole time series 320 to the Systemair CAD environment 10.

In continuation of figure 5, figure 6 illustrates part of the operational environment 310 i.e. the MS XL-spreadsheet 310. The illustrated table shows the output or export from the CAD environment 10 as a result of the input of time series 320 from figure 5. The table is the stored 560 result of simulating 520 in the Systemair CAD environment 10 the operation of a configured AHU 40 for each record of the time series 320 from figure 5.

In particular the table indicates the simulation result of specific AHU components 22 exemplified as 22A, ...22i, ... 22N as results of specific simulations 560A, ...560i, ... 560N according to one or more computable models 222. In particular the specific fan power (SFP) 714 result is seen. Otherwise the columns are self-explanatory of the configured AHU components 22.

In an example, the acts of simulating 560 operation of the AHU 40 in the Systemair CAD environment 10 could involve simulating 560 at least one or more of the following: heat recovery [%], cooling coil capacity [kW], heating coil capacity [kW], heating coil capacity - electricity [kW], heat pump [kW], control system [kW], or humidifier [kW].

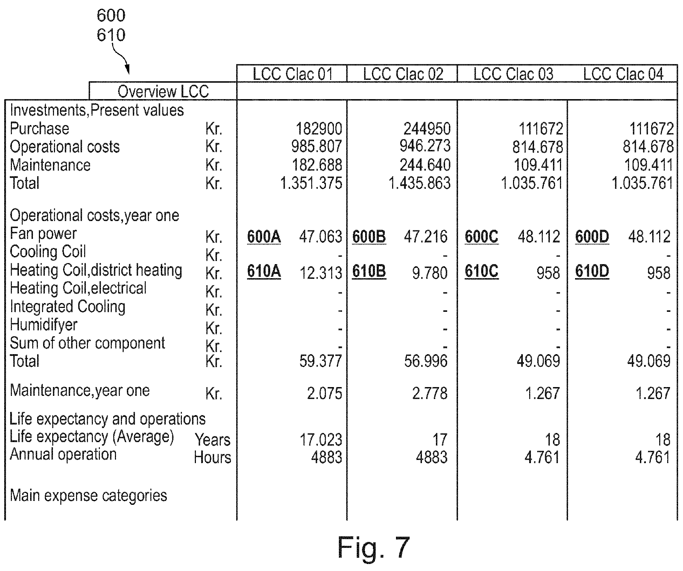

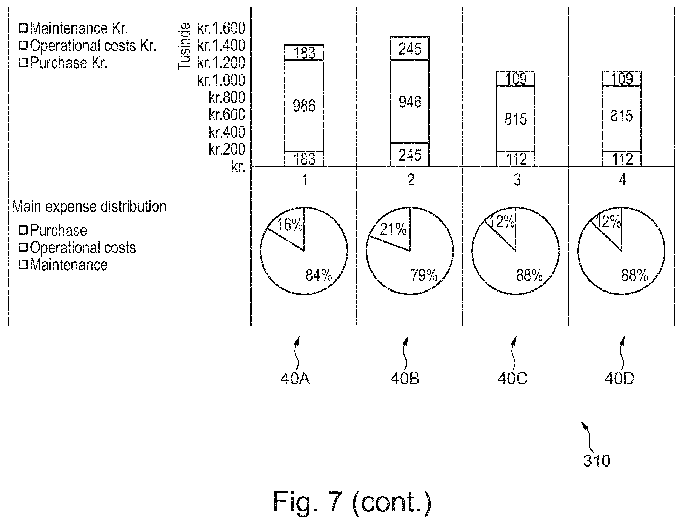

Figure 7 illustrates a result of estimating 600 aggregated operation 610 of a configured AHU 40.

The estimating 600 is performed in the operational environment 310. In continuation of the examples in figures 5 and 6, the first column illustrates the act of estimating 600 aggregated operation 610 based on a Life Cycle Costs (LCC) 600A, 610A analysis of a AHU 40A configured in Systemair CAD environment 10 and performing as illustrated in figure 6 under the operational conditions as represented by the time series 320 in figure 5.

The LCC analysis 600, 610 may involve aggregated estimates of purchase cost, operation costs and maintenance cost.

The LCC analysis 600, 610 may optionally aggregate annual costs of operation of fan power, cooling coil, heating coil (district heating), heating coil (electrical), integrated cooling, humidifier as indicated in the left most column of figure 7 for multiple AHUs 40A, 40B, 40C, 40D.

The LCC analysis 600, 610 may optionally estimate life expectancy [Average] and annual operation [hours].

Figure 7 illustrates the MS XL-spreadsheet 310 implemented in an operational environment configured for handling multiple LCC analyses 600A,610A, ... 600D,610D of different AHU 40A,..40D configurations thus allowing for comparisons of LCC analysis and comparison of different configurations of AHU 40. This will allow for exploring and comparing multiple configurations and for a user to select a particular AHU 40.

In view of the previous figures, the computer-implemented method may comprise acts of estimating 600 multiple aggregated operations 610 of multiple configured AHU s 40 and presenting the aggregated operation 610 of multiple AHUs 40 for a user selection 12 to be returned to the CAD environment 10 for further manual configuring.

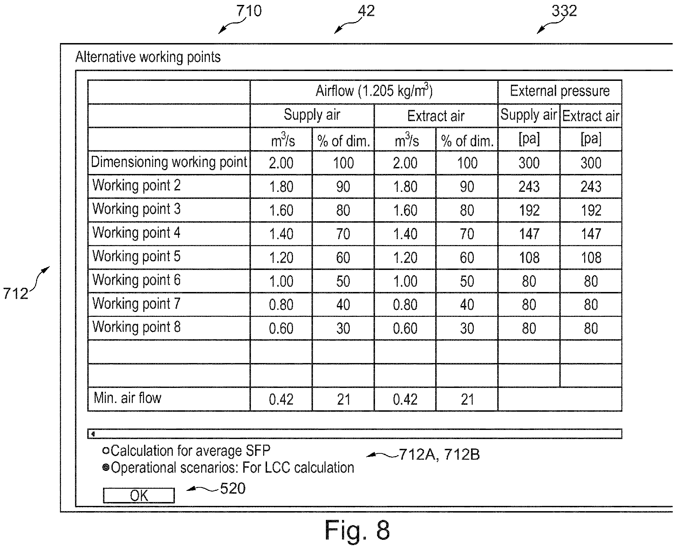

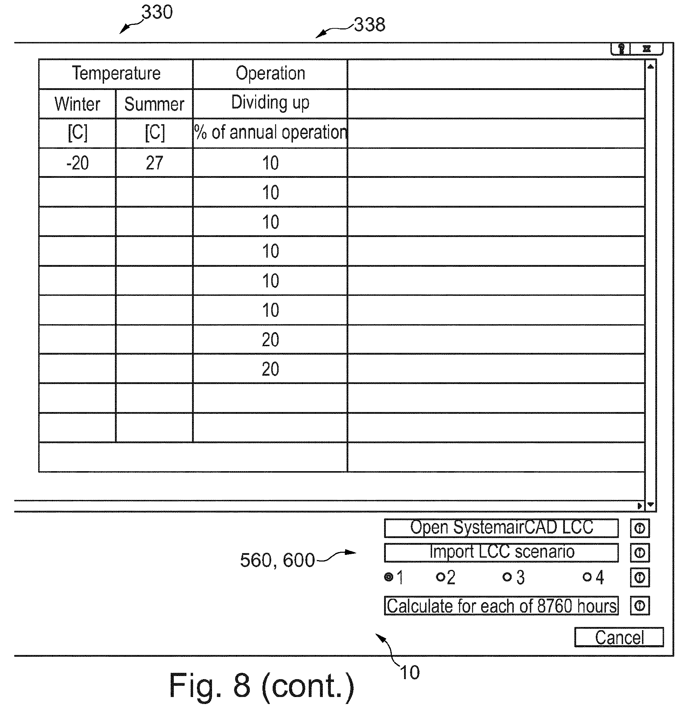

Figures 8, 9 and 10 may be seen in connection with each other to illustrate specifying a reduced set of working points 712.

In particular, in the CAD environment 10 simulating 520 specific fan power (SFP) 714 values using only the reduced working points 712 may be performed. In the operational environment 310 estimating 600 aggregated electrical use of the AHU may be performed by interpolating 620 between the SFP 714 values.

Figure 8 illustrates an example of specifying a reduced set 712 of working points 710. The specifying may be performed in the CAD environment 10 exemplified by the Systemair CAD environment 10. Other conditions 330 may be included such as external conditions 332 and operational conditions 338.

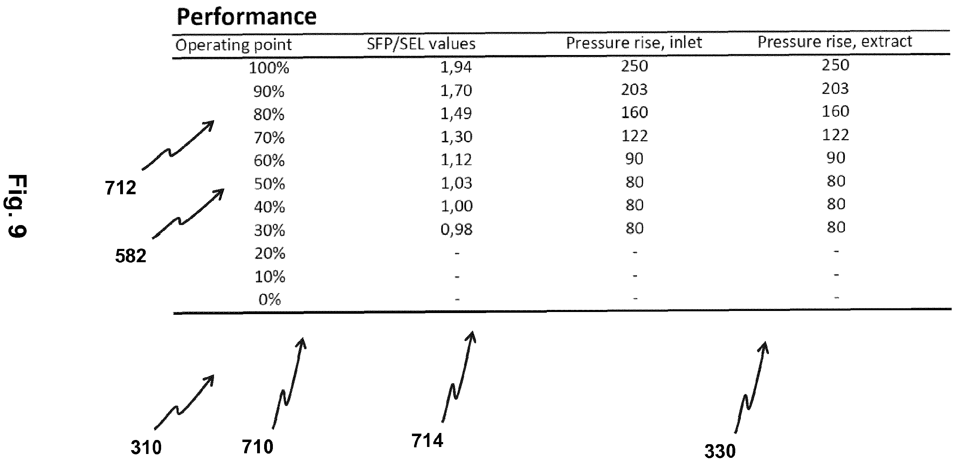

There is a simulation 520 choice of applying different computable models 222A, 222B. There is a choice of specifying alternative reduced working points 712A, 712B. There may be an option of choosing average SFP values as shown in figure 9 and there may be an option of selecting operational scenarios for LCC calculations as shown in figure 10.

In one example where the calculation is for average SFP, the working point range is binned for energy calculations from 100% to 30% with a step of 10%, where 10% and 20% are left empty.

For the reduced set of working points 712 the CAD environment 10 calculates or simulates 520 the SFP value 714 in the eight working points, e.g. 100%, 90%, 80%, 70%, 60%, 50%, 40% and 30% of the dimensioned airflow 42 and stores the results in the operational environment 310.

Figure 9 illustrates a table in the operational environment 310 exemplified by the MS XL-spreadsheet 310. The table is for a reduced set of data 582, here in the form of binned operating points/working points 710. The table is maintained or updated by receiving simulated data from the CAD environment 10 exemplified by the Systemair CAD environment 10.

The table is prepared with SFP values 714 obtained by simulation in the Systemair CAD environment 10. Furthermore the table is provided with appropriate conditions 330.

The stored reduced set of working points 712 and corresponding SFP values 714 may be used as a look-up table for interpolating 620 between results during estimating 600 e.g. LCC analysis 600,610.

In connection with figure 8, figure 9 illustrates the CAD environment 10 where a reduced set of working points 712 are specified for a configured AHU with a particular component 22 and airflow 42. The table includes results of simulation of SFP-values 714 and operational or working points 712. The CAD environment 10 is linked 400 with the operational environment 310, i.e. the Systemair CAD 10 is linked with the MS XL-spreadsheet 310 and configured to update the table (from figure 9) by returning 560 simulated results and to perform an execution of estimation 600 LCC analysis in the MS XL-spreadsheet where the LCC analysis is performed by interpolating 620 between the SFP-values 714 obtained for respective working points 710.

Thus from the MS XL-sheet 310 for a particular set of time series of 8760 records of seasonal data, these 8760 records may be transferred to the Systemair CAD to simulate operating in conditions of outdoor temperature and humidity, inlet temperature and humidity, operating point and pressure drop, inlet and outlet conditions as configured, but for e.g. a fan, the energy consumption is only simulated for eight working points.

In summary, for e.g. eight working points the SFPv and/or SFPe are calculated or simulated. For the remaining simulation of e.g. heat recovery [%], cooling coil capacity [kW], heating coil capacity [kW], heating coil capacity - electricity [kW], heat pump [kW], control system [kW] and humidifier [kW], simulations are performed for all 8760 records, but for the SFPv and/or SFPe the results are obtained by interpolating between the eight SFPv and/or SFPe.

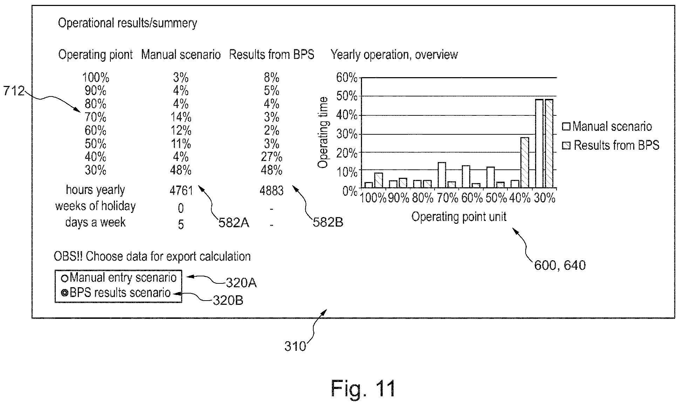

Figure 10 illustrates, alternatively, an averaged 640 and periodised 650 (summer 650A, winter 650B and spring /autumn 650C) operational conditions set of data 330 along with other preconditions 330 and air flows 42 at inlet and extract. The result of the associated estimated LCC analysis 600, 610 of a configured AHU 40 under the specified conditions 330, and a set of reduced working points 712 is available in the operational environment 310 similarly to what is seen in figure 7 and figure 11.

Figure 11 illustrates an example of a result 600 of an implementation of a BPS based on a set of working points 710 for different sources of time series. One time series 320A is for a manual scenario in the form of a reduced data set 582A. Another time series 320B is for a BPS scenario 582B.

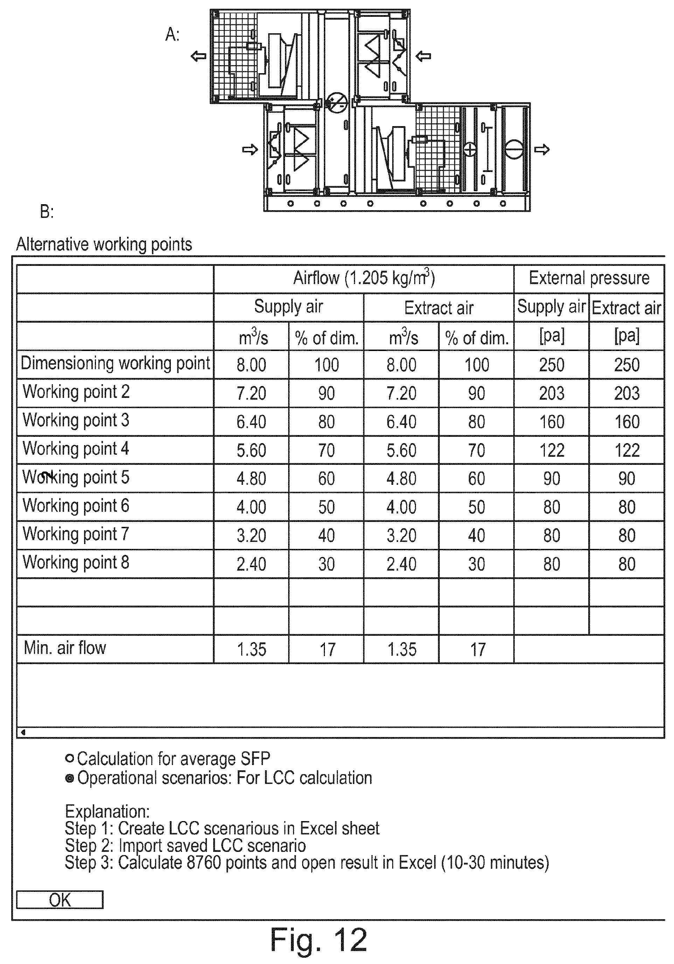

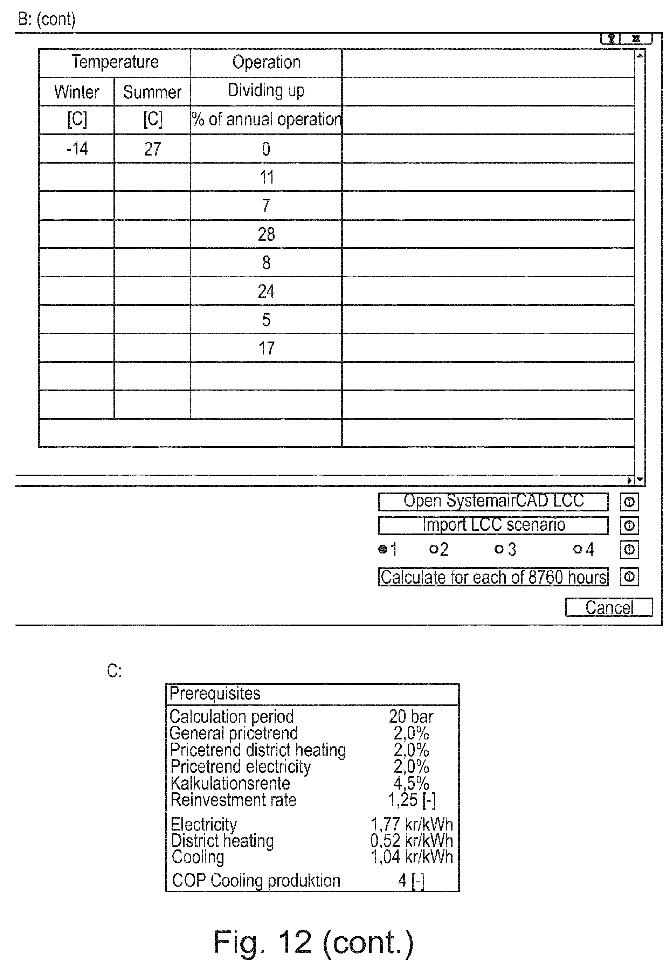

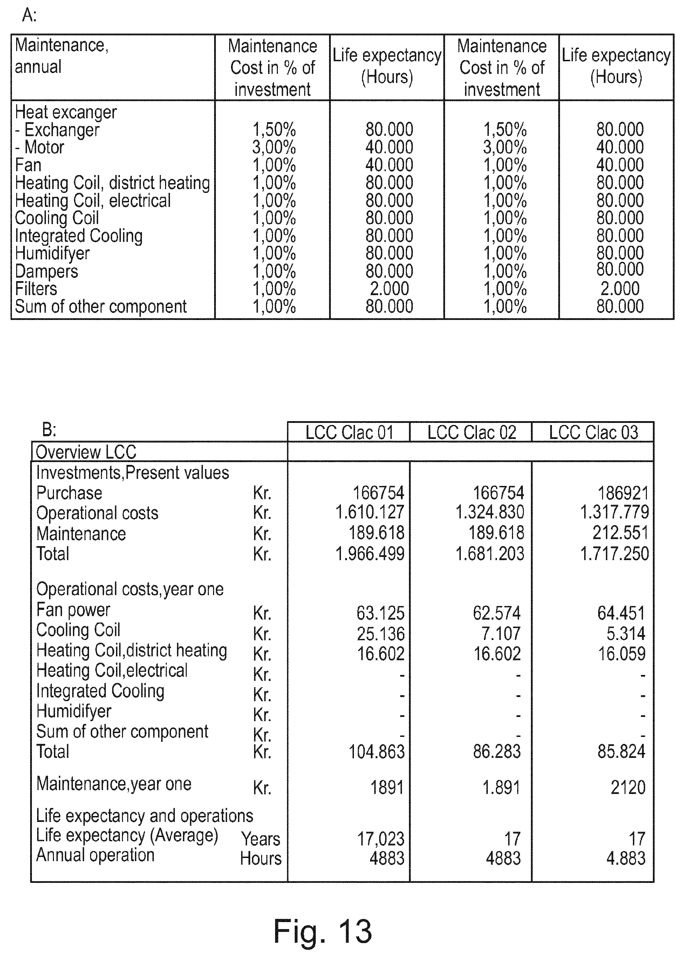

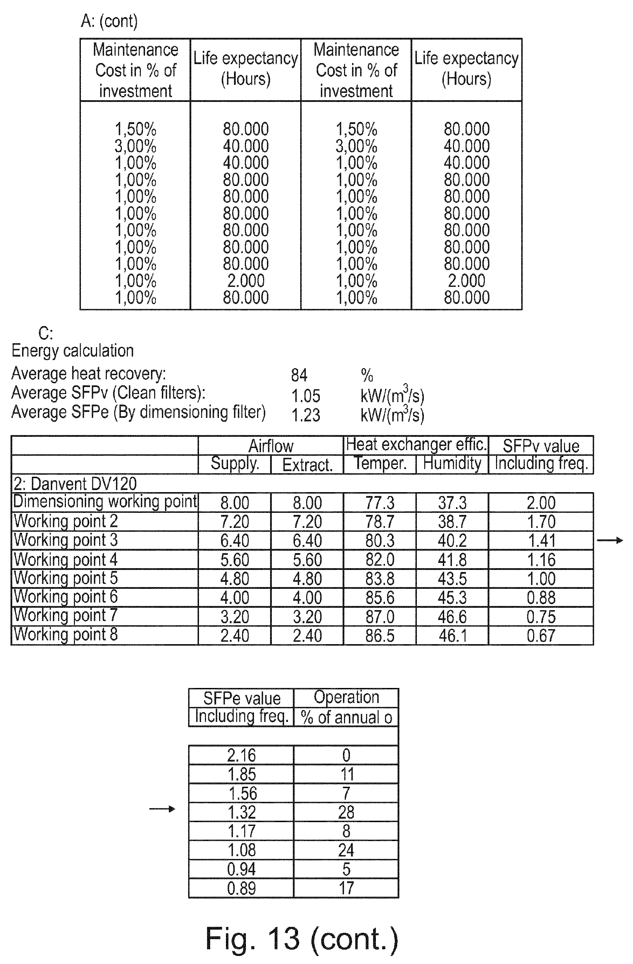

Figures 12 and 13 collectively illustrate aspects of an implementation where the CAD environment is the Systemair CAD, and the operational environment is implemented in a Microsoft XL-spreadsheet and named Systemair LCC calculation spreadsheet.

The system offers a simulation of the energy consumption of an air handling unit (AHU) instead of the currently used concurrency factors. Concurrency factors are best guess of an average air volume used in a building. The concurrency factor calculation model requires that the energy consumption of the AHU is reduced / increased proportionally with the air volume, which is far from the truth.

The purpose of the system is to calculate different AHU selections for the same building scenario. This enables the user to optimize his selections from an energy and a "life time cost" point of view. The implementation will also be able to check if the unit will run under a variety of conditions without any problems.

### Example:

A building simulation is processed, generating the requirement for the AHU as Inlet temperature [°C], Extract temperature [°C], Relative humidity [%], Inlet air volume [m³/h] and Extract air volume [m³/h].

The simulation data are copied to the Systemair LCC calculation spreadsheet / Result from BPS, and the XL-spreadsheet is stored.

The AHU combinations are selected in the SystemairCAD. In the example, the operator would like to calculate 3 AHU combinations for the simulated building:
1. Shown combination with **standard rotary heat exchanger** and **without** cooling recovery.
2. Shown combination with **standard rotary heat exchanger** and **with** cooling recovery activated.
3. Shown combination with **sorption rotary heat exchanger** and **with** cooling recovery activated.

A sorption exchanger is a moist-transferring heat exchanger. The sorption exchanger can save up to 40% cooling energy because of the moist transfer.

A link between the saved spreadsheet and SystemairCAD is generated by selecting "Open SystemairCAD LCC". Calculated SFPe values and air volumes are transferred to the spreadsheet.

When all data are A-OK, the spreadsheet is saved. All data are updated into SystemairCAD by selecting "Import LCC scenario". Select wanted scenario to insert the data 1, 2, 3 or 4. Press "Calculate for each 8760 hours".

Now the system will use the SystemairCAD to make an exact calculation for every set of data defined in the spreadsheet for all working 8760 points. The spreadsheet will be displayed when the calculation has been completed. The result can be seen on the front page "LCC summary". Prices and price trends are defined in the Systemair LCC spreadsheet.

The user or operator is able to define maintenance data in the "Maintenance, annual" table. Default values are defined in the system.

Result: The user is able to conclude following from the calculations:
Selection 2 (LCC calculation 02) is the most lifetime cost-efficient alternative of the three AHUs.

Sorption heat exchanger (selection 3) has no benefit seen from an economical point of view. Some cooling energy will be saved, but the price of the exchanger exceeds the savings. Of course, the energy-saving of app. 1000 kW/year can be interesting if the system is close to the limit of using too much energy/m² in the building.

There is a small reduction in the fan energy consumption from selection 1 to selection 2. The activated cooling recovery in selection 2 offers a benefit as follows: Reduced cooling requirement will reduce the size of the cooling coil. This will reduce the pressure drop of the cooling coil and thereby the energy consumption of the fan.

Focus is on selection 2: From the detailed information about the 8 working points, the operator can see:
- The average SFPe value is 1.23 kW/(m³/s) for the unit for the defined scenario.
- The fan seems to run without problems since the SFPe value is decreasing in every step down to working point 8. This means that impellers and motors are not near any border values. The efficiencies of the impeller and motor will be much reduced. If the system is close to the border values increasing SFPe values will be seen for the very low air volumes.
- The efficiency of the rotary heat exchanger will decrease only slightly in working point 8, but nothing seriously.

In this project it can be concluded that everything checks out fine.

The benefit of making the analysis is both the energy-saving aspects and the financial evaluation of the selections made.

By going from "what we used to do" in selection 1 to selection 2, the calculation shows that it is possible to save 185.000 DKK on the life time cost.

For selection 3, i.e. opting for the lowest running cost and thereby lowest energy consumption per year, the simulation shows a saving from selection 1 to selection 3 of approx. 15.000 DKK / year.

| **Item** | **No** |
|---|---|
| Computer-aided design (CAD) environment | 10 |
| User input | 12 |
| Library of objects of AHU components | 20 |
| AHU component | 22, 22A, 22B, ...22i, ...22N |
| Library of objects of linkages | 30 |
| Link | 32, 32A, 32B, ... |
| Air handling unit (AHU) | 40 |
| Airflow | 42 |
| External side | 44 |
| Internal side | 46 |
| Input | 52 |
| Output | 54 |
| Computer-implemented method | 100 |
| Providing computer-aided design (CAD) environment | 200 |
| Configuring | 210 |
| Generating a computable model | 220 |
| Computable model | 222 |
| Providing an operational environment | 300 |
| Operational environment | 310 |
| Time series | 320 |
| Seasonal data | 322 |
| Conditions | 330 |
| External conditions | 332 |
| Internal conditions | 334 |
| Inlet conditions | 336 |
| Operational conditions | 338 |
| Linking | 400 |
| Repeatedly | 500 |
| Passing | 510 |
| Simulating | 520 |
| Returning | 560 |
| Sorting | 570 |
| Sorted data | 572 |
| Reducing | 580 |
| Reduced data | 582 |
| Identifying boundaries | 590 |
| Boundary data | 592 |
| Assessing (previously simulated) | 595 |
| Reusing | 596 |
| Estimating | 600 |
| Aggregated operation | 610 |
| Interpolating | 620 |
| Averaged | 640 |
| Periodised | 650 |
| Working points/Operating points | 710 |
| Reduced set of working points | 712 |
| Specific fan power (SFP) | 714 |
| Configurator | 1000 |
| Computational unit | 1100 |
| Processor | 1110 |
| Storage | 1120 |
| User interface | 1200 |

## Claims

1. Computer-implemented method (100) of configuring an air handling unit (AHU) (10) for providing airflow (42) between an external side (44) and an internal side (46), the method comprising the acts of:
- Providing (200) a computer-aided design (CAD) environment (10) with access to a library of objects of AHU components (20) and configured for a user input (12) for selecting and changing objects of AHU components (22);
- Providing (300) an operational environment (310) configured to store time series (320) of seasonal data (322) of external (332) and internal (334) conditions including inlet (336) and/or operational conditions (330);
- Linking (400) the CAD environment (10) with the operational environment (310) for exchange of data and instructions;
- Configuring (210) in the CAD environment (10) an AHU (40) with at least one input (52) and at least one output (54) by selecting, linking and/or changing objects of AHU components (22) in the CAD environment (10);
- Generating (220) a computable model (222) of the AHU (40) in the CAD environment (10), which computable model (222) is configured to simulate operation (520) as a function of at least one external input (52) and to return at least one internal output (54);
- Repeatedly (500) performing one or more acts of:
∘ Passing (510) at least one record of seasonal data (322) from the operational environment (310) to the CAD environment (10);
∘ Simulating (520) operation of the AHU (40) in the CAD environment (10) using the computable model (222);
∘ Storing (560) in the operational environment (310) the result of simulating (520);
- Estimating (600) aggregated operation (610) of the AHU (40) in the operational environment (310) based on the stored simulation results of operation of the AHU (40).

2. Computer-implemented method (100) according to claim 1, comprising the acts of
- specifying a reduced set of working points (712);
- in the CAD environment (10) simulating (520) specific fan power (SFP) (714) values using only the reduced set of working points (712);
- in the operational environment (310) estimating (600) aggregated electrical use of the AHU by interpolating (620) between the SFP (714) values.

3. Computer-implemented method (100) according to claim 1 or 2, wherein the method (100) comprises the acts of estimating (600) multiple aggregated operation (610) of multiple configured AHUs (40) and presenting the aggregated operation (610) of multiple AHUs (40) for a user selection (12) to be returned to the CAD environment (10) for further manual configuring.

4. Computer-implemented method (100) according to any preceding claim, comprising an act of sorting (570) the seasonal data (322) according to condition(330) prior to repeatedly (500) simulating (520) operation of the AHU (40) and prioritising repeatedly (500) simulating (510) operation of the AHU (40) according to the sorted seasonal data (572).

5. Computer-implemented method (100) according to any preceding claim, comprising an act of identifying boundaries (590) of the seasonal data (322) and prioritising the act of simulating (520) operation of the AHU (40) of the identified boundaries (592).

6. Computer-implemented method (100) according to any preceding claim, comprising an act in the operational environment (310) of assessing (595) if a record of seasonal data (322) has previously been simulated (590) - and if so reusing (596) the previously obtained result of simulating (590) without simulation (590) in the CAD environment (10).

7. Computer-implemented method (100) according to any preceding claim, comprising an act of providing multiple zones of one or more of internal (334), inlet (336) and/or operational (338) conditions (330) and performing an act of averaging the respective conditions prior to performing repeatedly (500) simulating (520) operation of the AHU (40).

8. Computer-implemented method (100) according to any preceding claim, wherein
- the act of simulating (560) operation of the AHU (40) in the CAD environment (10) involves simulating (560) at least one or more of:
∘ Heat recovery [%]
∘ Cooling coil capacity [kW]
∘ Heating coil capacity [kW]
∘ Heating coil capacity - Electricity [kW]
∘ Heat pump [kW]
∘ Control system [kW]
∘ Humidifier [kW]
and
- the act of estimating (600) aggregated operation (610) involves estimating at least one or more Life Cycle Costs (LCC) of:
∘ Purchase cost
∘ Operation costs
∘ Maintenance cost
- Optionally annual cost of operation of
∘ Fan power
∘ Cooling coil
∘ Heating coil (district heating)
∘ Heating coil (electrical)
∘ Integrated cooling
∘ Humidifier
- Optionally estimating
∘ Life expectancy [Average]
∘ Annual operation [Hours].

9. A configurator (1000) for configuring an air handling unit (AHU) (40) for providing airflow (42) between an external side (44) and an internal side (46), the configurator (1000) comprising
- a computational unit (1100) comprising at least one processor (1110) and at least one storage (1120) and further comprising
- a computer-aided design (CAD) environment (10) with access to a library of objects of AHU components (20) and
- an operational environment (310) configured to store time series of seasonal data (320) of external (332) and internal (334) conditions including inlet (336) and/or operational (338) conditions (330);
- a user interface (1200) for a user to interact with the CAD environment (10) and/or the external operational environment (310);
where the CAD environment (10) is configured to generate a computable model (222) of the AHU (40) for simulating operation (520) as a function of at least one input (52) and to return at least one output (54);
- where the operational environment (310) is configured to store time series (320) of seasonal data (322) of external (332) and internal (334) conditions including inlet (336) and/or operational (338) conditions (330);
where the configurator (1000) is configured to repeatedly (500)
∘ Passing (510) at least one record of seasonal data (322) from the operational environment (310) to the CAD environment (10);
∘ Simulating (520) operation of the AHU (40) in the CAD environment (10) using the computable model (222);
∘ Storing (560) in the operational environment (310) the result of simulating (520);
- and there the configurator (1000) is configured to estimating (600) aggregated operation of the AHU (40) in the operational environment (310) based on the stored simulation results of operation of the AHU (40).

10. A configurator (1000) according to claim 9, wherein the CAD environment (10) and the operational environment (310) are configured to perform the acts of any of the claims 1 to 8.
